# EUROPEAN PATENT APPLICATION

(11) **EP 4 768 415 A1**
(43) Date of publication of application: **01.07.2026**
(21) Application number: 24223502.6
(22) Date of filing: 27.12.2024
(51) Int. Cl.: B66C 1/10

(54) **LIFTING ASSEMBLY AND KIT OF PARTS CONFIGURED TO FORM SUCH A LIFTING ASSEMBLY**

(71) Applicant: Vattenfall AB, 169 92 Stockholm (SE)
(72) Inventor: OLSEN, Michell Mirsbach, 8000 Aarhus C (DK); DURUP, Johan, 7400 Herning (DK)
(74) Representative: Zacco Denmark A/S

(57) **Abstract**

The present invention relates to a lifting assembly (1) for lifting a wind turbine component (17, 18, 19). The lifting assembly (1) comprises: an upper part (2) comprising a lifting beam (4), a suspension arrangement (5) configured for suspending the lifting beam (4) from a crane hook (9), and a locking assembly (6); and a lower part (3) exchangeable connectable to the locking assembly (6) of the upper part (2), the lower part (3) comprising a lifting tool (7) configured for connection to the wind turbine component (17, 18, 19). The upper part (2) further comprises an actuator arrangement (8) configured to allow a lateral displacement of the lifting beam (4) in relation to the suspension arrangement (5).

## Description

### Technical field

The present invention relates to a lifting assembly for lifting a wind turbine component. A kit of part for forming such a lifting assembly is also presented as well as a method of lifting a wind turbine component.

### Background

Wind turbine commission and decommission requires specialized lifting tools due to the complex task of lifting large and heavy wind turbine components. Commissioning of wind turbines in the art requires precise and specialized lifting tools, which often vary for different components, different weights, geometries, and also different wind turbine suppliers. Lifting wind turbine components therefore requires specialized tools for each individual type of wind turbine component. Such requirements to the lifting tools require a significant large set of tools and lifting assemblies, which all require cumbersome machining and manual labor for each individual lift. One of the primary concerns is the limited lifting capacity and range of motion of existing systems. As turbine designs continue to evolve with larger components, conventional cranes may struggle to lift these increasingly heavy and oversized parts, requiring costly upgrades or the use of multiple cranes. Furthermore, existing lifting mechanisms are often prone to mechanical wear and may not offer the fine control required to place turbine parts with the necessary accuracy. Therefore, there is a need for an improved lifting tool for wind turbine cranes that can handle larger and heavier loads with greater efficiency, precision, and adaptability. Such a tool would offer enhanced safety, reduce operational costs, and increase the overall effectiveness of wind turbine installation and maintenance operations.

### Summary of the invention

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It is an object to mitigate, alleviate or eliminate one or more of the above-identified deficiencies in the art and disadvantages singly or in any combination and solve at least the above-mentioned problem.

Thus, disclosed herein in a first aspect a lifting assembly for lifting a wind turbine component is presented. The lifting assembly comprises an upper part. The upper part comprises a lifting beam, a suspension arrangement configured for suspending the lifting beam from a crane hook, and a locking assembly. The lifting assembly further comprises a lower part exchangeable connectable to the locking assembly of the upper part. The lower part comprises a lifting tool configured for connection to the wind turbine component. The upper part further comprises an actuator arrangement configured to allow a lateral displacement of the lifting beam in relation to the suspension arrangement.

An upper part comprising a lifting beam, a suspension arrangement configured for suspending the lifting beam from a crane hook, and a locking assembly allow for a variety of lifting operations facilitated by a common lifting component. The lifting beam facilitate a point of attachment for one or more components to be lifted, such as wind turbine components.

The suspension arrangement provides an interface for external lifting machinery, such as a crane, such as a crane hook operated by a crane. The suspension may be a part of the upper part as described above, and may thus be configured for suspending the lifting beam and locking assembly of the upper part. A connection between external lifting machinery, such as a crane, such as a crane hook operated by a crane and the suspension arrangement allow the lifting assembly to be used in lifting operations.

The suspension arrangement is configured to be movably connected to the lifting beam. An example is that the suspension arrangement is installed by the use of rails, wheels, or any other arrangement that is suitable for movably connecting the suspension arrangement to the lifting beam.

The locking assembly of the upper part facilitate an interface towards a lower part the lower part, whereas the lower part being an interconnection between the upper part and the component being lifted.

The lower part may be exchangeable connectable to the locking assembly of the upper part, meaning that the lower part may be added, removed, and thus also replaced. The exchangeable connection between the lower part of the upper part, such as a replacement of the upper part, may be due to wear and tear of the lower part, or also due to replacement of the lower part. The exchangeable connection of the lower part may also enable the lower part to be selected based on the lifting task. This selection may be based on the geometry of the component to be lifted, may be based on weight restrictions, and may also be based on to load distribution of the lifting operation, but may also be other reasons where an exchange of the lower part may be required, such as for reasons related to the type of component to be lifted, such as the type of wind turbine component to be lifted.

The lower part may thus comprise a lifting tool. The lifting tool facilitate a connection to the component, such as the wind turbine component. The connection to the component may e.g. be to a lifting eye of the component.

The upper part may further comprise an actuator arrangement configured to allow a lateral displacement of the lifting beam in relation to the suspension arrangement. The lateral displacement of the lifting beam in relation to the suspension arrangement allow manipulation of the center of gravity of the whole lifting operation, lifting assembly and component included. This manipulation of the center of gravity may be facilitated by the lateral displacement of the lifting beam, whereas the interface to the external lifting machinery, such as the crane, such as the crane hook operated by a crane and the interface to the component, such as the lower part, are both fixed.

Keeping the interconnection between the upper part and lower part fixed during manipulation of the lateral displacement between the lifting beam and the suspension arrangement may provide an option for configuring a more beneficial load path through the lifting assembly, which may enable remaining structural and mechanic element of the lifting operation to be configured for optimal weight distribution. Additionally, keeping the interconnection between the upper part and lower part fixed during manipulation of the lateral displacement between the lifting beam and the suspension arrangement allow for maintaining a load distribution on the point of interconnection between the upper part and the lower part during the lifting operation. Further, manipulating the center of gravity during a lifting operation by manipulating the lateral displacement between the lifting beam and the suspension arrangement may improve on-site safety, in addition to provide a load distribution throughout the lifting assembly may be foreseeable and possible also optimal.

The upper part may comprise trunnions. The trunnions may be arranged on each side of the lifting beam. The trunnions may be configured for being attached to ropes. An upper part comprising trunnions may allow the lifting assembly to rotate, which may add an additional degree of freedom for the mobility of the lifting assembly. The rotation of the lifting assembly by the trunnions may be enabled by the use of ropes, chains, or any other external medium configured for pulling or pushing the trunnions. Further, the trunnions may allow for stabilizing the lifting assembly during a lifting operation by the use of ropes, e.g. by counteracting a rotation of the lifting assembly occurring during the lifting operation.

The lower part may comprise a locking interface configured to engage with the locking assembly of the upper part.

A locking interface configured to engage with the locking assembly of the upper part may be understood as an interface with a mechanism configured for quick exchangeability of the lower part. Examples of such interface are a hook, a bolt, a pin, a chain. Alternatively, or in combination, the locking interface may comprise an electric interface, such as an electromagnetic interface, such as an electromagnet.

The locking interface configured to engage with the locking assembly of the upper part facilitate an improved user-friendly exchange operation of the lower part of the lifting assembly.

The locking assembly may comprise a plurality of lower part attachment points. The plurality of lower part attachment points may be distributed along a length of the lifting beam. A plurality of lower part attachment points distributed along a length of the lifting beam facilitate an improved freedom of operation when connecting the lower part to the upper part. This improved freedom of operation may enable a lifting operation requiring a connection of the lower part to one of the plurality of lower part attachment points. Alternatively, or in combination, this improved freedom of operation, may enable a lifting operation requiring a connection the lower part to a plurality of lower part attachment points, such as two or more lower part attachment points. Alternatively, or in combination, a plurality of lower part attachment points distributed along a length of the lifting beam may enable the use of a plurality of lower parts, each lower part being exchangeably connected to different lower part attachment points.

The lateral displacement of the lifting beam may be dependent on the lifting tool. The actuator arrangement may facilitate a lateral displacement of the lifting beam in relation to the suspension arrangement based on the lifting tool, such as dependent on the lifting tool. Examples of the lateral displacement of the lifting beam being dependent of the lifting tool, are that the lateral displacement of the lifting beam is dependent on where the lifting tool is attached on the locking assembly, and/or the weight of the lifting tool, and/or the geometry of the lifting tool. Alternatively, or in combination, the lateral displacement of the lifting beam may be dependent on the type of lifting tool.

Yet alternatively, or in combination, the lateral displacement of the lifting beam may be based on the connection of the lower part, such as the connection of the lifting tool. An example of this may be execution of a lateral displacement of the lifting beam for connecting or decoupling the lifting tool, which may allow for connection of lifting tools with minimal use of manual labor.

Yet alternatively, or in combination the lateral displacement of the lifting beam may be dependent on the connection between the lifting tool and the wind turbine component. An example of the lateral displacement being dependent on the connection between the lifting tool and the wind turbine component is that the lateral displacement of the lifting beam is dependent at which of the plurality of lower part attachment points the lifting tool is connected to. Configuring a lateral displacement dependent on the connection between the lifting tool and the wind turbine component allow for a configurable center of gravity of the lifting assembly.

The lateral displacement of the lifting beam may be dependent on both the lifting tool and the connection between the lifting tool and the wind turbine component. An example of the lateral displacement being dependent on both the lifting tool and the wind turbine component is a lateral displacement of the lifting beam based on the center of gravity of the lifting operation.

The lifting assembly may further comprise a platform. The platform may be arranged on the lifting beam and may comprise an upwards facing floor surface. The platform comprising an upwards facing floor surface provide a working platform for both storing equipment relevant for the lifting assembly, such as additional lifting tools or other necessities, such as harness's for human workers. The platform may comprise a fence along the periphery of the upwards facing floor surface, the fence may provide an improved onsite safety for human workers placed on the upwards facing floor surface. Alternatively, or in combination, the fence may decrease risk of fallen objects from the platform of the lifting assembly.

The lifting assembly may further comprise a battery energy storage system, BESS. The BESS may be arranged on the platform and may be configured for powering the actuator arrangement. A lifting assembly comprising a BESS facilitate a power supply to machinery, such as machinery of the lifting assembly. The BESS may be configured for powering the actuator arrangement of the lifting assembly, the suspension arrangement of the lifting assembly, a controller of the lifting assembly, and/or any other equipment that requires a supply of electricity. The BESS may allow for an increased portability of the lifting assembly, due to the reduced, or removed, need for external power supply to the lifting assembly. The lifting assembly may thus be utilized at areas where no such external power supply may be available, such as offshore, or a remote location with no access to power. Arranging the BESS on the platform may further improve the flexibility of the lifting assembly, such as further improve the mobility of the lifting assembly, as power supply to the lifting assembly may be arranged on the platform of the lifting assembly. Further, a BESS arranged on a platform of the lifting assembly, wherein the BESS power machinery of the lifting assembly, such as the actuator arrangement, the suspension arrangement of the lifting assembly, a controller of the lifting assembly, and/or any other equipment that requires a supply of electricity, would need relative shorter lengths of electrical conductors, compared to a BESS arranged on the ground power the same components. Additionally, conductors between the BESS and the beforementioned conductors would not hinder maneuverability of the lifting assembly, as the BESS and the accompanying conductors would move along the lifting assembly by being arranged on the platform.

The actuator arrangement may comprise a hydraulic actuator. The actuator arrangement may also comprise a hydraulic pump. The hydraulic pump may be configured for operating the hydraulic actuator. An actuator arrangement comprising a hydraulic actuator, such as a hydraulic actuator allow for a simple actuator arrangement configured for facilitating a lateral displacement of the lifting beam in relation to the suspension arrangement. A hydraulic based actuator may provide an improved force output simultaneously as being compact compared to other types of actuators, a hydraulic based actuator may also provide improve precision control and energy efficiency. The hydraulic actuator may be operated by a hydraulic pump, which may be part of the actuator arrangement. An actuator arrangement comprising both a hydraulic actuator and a hydraulic pump allow for an increased portability of the lifting assembly, due to the reduced, or removed, need for external pressure supply for the hydraulic actuator. The lifting assembly may thus be utilized at areas where no such external pressure supply is available, such as offshore, or a remote location with no access to power or hydraulic pumps. Further, an actuator arrangement comprising a hydraulic actuator and a hydraulic pump may improve the mobility of the lifting assembly as a whole, as a supply of hydraulic pressure may be available to the actuator arrangement without the need for external hoses or hydraulic pressure supply from outside the lifting assembly, such need for external hoses or hydraulic supply may interfere with the lifting operation.

According to a second aspect, a kit of parts configured to form a lifting assembly is presented. The kit of parts comprises an upper part. The upper part comprises a lifting beam, a suspension arrangement configured for suspending the lifting beam from a crane hook, an actuator arrangement configured to allow a lateral displacement of the lifting beam in relation to the suspension arrangement, and a locking assembly. The kit of parts further comprises a plurality of independent lower parts exchangeable connectable to the locking assembly of the upper part. Each independent lower part may be configured to be connected to different wind turbine components.

The kit of parts may form the lifting assembly of the first aspect.

The above-mentioned features of the lifting assembly of the first aspect, when applicable, apply to the kit of part of the second aspect as well. In order to avoid undue repetition, reference is made to the above.

Each locking interface of the plurality of independent lower parts may be identical. The locking interfaces of the independent lower parts facilitate a connection between the lower part and the upper part. By having each locking interface of the plurality of independent lower parts identical, a uniform locking assembly of the upper part may be possible. The uniform locking assembly of the upper part in combination with each locking interface of the plurality of independent lower parts being identical allows for an improved flexibility of the connection between various independent lower parts and the upper part. Such improved flexibility allows for an improved configurability of the kit of parts, which allow for a safer, more energy efficient, and more complex lifting operations.

At least one of the different wind turbine components may be a wind turbine blade. The kit of parts may comprise a lower part configured for connecting to the wind turbine blade. Such kit of parts may be used to form a lifting assembly for lifting wind turbine blades. The lower part being configured to be connected to the wind turbine blade may be configured for clamping the wind turbine blade.

At least one of the different wind turbine components may be a generator. The kit of parts may comprise a lower part configured for connecting to the generator. Such kit of parts may be used to form a lifting assembly for lifting generators. The lower part being configured to be connected to the generator may comprise a pivot joint and a foundation rotatable attached to the pivot joint. The lifting tool may be configured to receive the generator in a first rotational position of the foundation, lift the generator in a second rotational position of the foundation, and release the generator in the first rotational position of the foundation.

At least one of the different wind turbine components may be a nacelle. The kit of parts may comprise a lower part configured for connecting to the nacelle. Such kit of parts may be used to form a lifting assembly for liftin nacelles.

According to a third aspect, a method of lifting a wind turbine component is presented. The method may be performed using a lifting assembly according to the first aspect and/or using the components of the kit of parts of the second aspect being formed into a lifting assembly. The method comprises the steps of: connecting the lower part to the locking assembly of the upper part; connecting the lifting tool of the lower part to the wind turbine component; suspending the lifting beam of the upper part by the suspension arrangement from a crane hook; and operating the actuator arrangement based on the lifting of the wind turbine component.

The above-mentioned features of the first and/or second aspect, when applicable, apply to the method of the aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a", "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrate a lifting assembly.
Fig. 2 illustrates a lifting assembly, wherein the lifting tool comprises a locking interface configured to engage with the locking assembly of the upper part.
Fig. 3 illustrates a lifting assembly, wherein the locking assembly comprises a plurality of lower part attachment points distributed along a length of the lifting beam.
Fig. 4 illustrates a lifting assembly, wherein the locking assembly comprises a plurality of lower part attachment points distributed along a length of the lifting beam and wherein the lifting tool comprises a and wherein the lifting tool comprises a locking interface configured to engage with said plurality of lower part attachment points.
Fig. 5 illustrates a lifting assembly comprising a platform.
Fig. 6 illustrates a lifting assembly comprising a platform and trunnions.
Fig. 7 illustrates a lifting assembly lifting a nacelle.
Fig. 8 illustrates a lifting assembly lifting a hub.
Fig. 9 illustrates a lifting assembly with a generator connected to the lifting tool.
Fig. 10 illustrates a lifting assembly lowering a generator.

### Detailed description

The present invention will now be described more fully hereinafter with reference to the accompanying drawings, in which currently preferred embodiments of the invention are shown. This invention may, however, be embodied in many different forms.

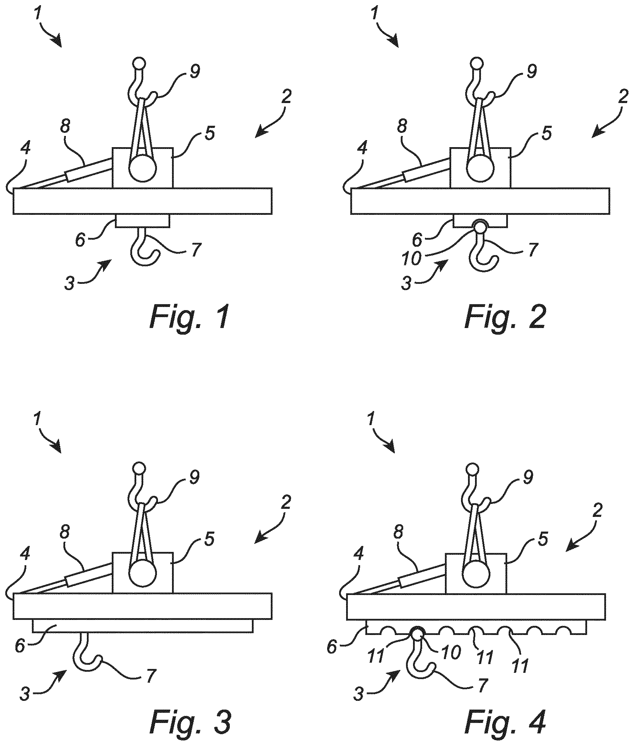

Fig. 1 illustrates a lifting assembly 1, the lifting assembly comprises an upper part 2 and a lower part 3. The upper part 2 comprises a lifting beam 4, a suspension arrangement 5, and an actuator arrangement 8 configured for allowing a lateral displacement of the lifting beam 4 in relation to the suspension arrangement 5. The lifting assembly 1 is suspended by a crane hook 9, which is connected to the suspension arrangement 5. The connection between the crane hook 9 and the suspension arrangement 5 may be a direct connection, but may also be realized by the use of ropes, chains, etc. The upper part 2 further comprises a locking assembly 6, the locking assembly 6 acts as an interface to the lower part 3 of the lifting assembly 1. The lower part 3 comprises a lifting tool 7 exchangeably attached to the locking assembly 6 of the upper part 2. The lifting tool 7 is configured for connecting to a wind turbine component. In operation, the lifting assembly 1 may have a lower part 3 comprising a lifting tool 7 configured for a specific lifting task attached to the locking assembly 6. The lifting assembly 1 may then be lifted by the use of the crane hook 9, and moved towards the component to be lifted. The lifting assembly 1 may then be lowered so as the lifting tool 7 of the lower part 3 may be connected to the component to be lifted, this connection may be assisted by displacing the lifting beam 4 in relation to the suspension arrangement 5 with the use of the actuator arrangement 8. The lifting assembly 1 together with the component to be lifted may then by lifted by a crane operating the crane hook 9. During the lifting operation, a center of gravity may be shifted for the lifting assembly 1, as it now also carries a component, particularly in cases where the component is of a significant weight near the weight of the lifting assembly 1 or above. The center of gravity of the combination of the lifting assembly 1 and the component may then be manipulated by displacing the lifting beam 4 in relation to the suspension arrangement 5 with the use of the actuator arrangement 8. As an example, the lifting beam 4 may be laterally displaced in relation to the suspension arrangement 5 by the use of the actuator arrangement 8, so as a combined center of gravity of the lifting assembly 1 and the component being lifted is near or at a vertical line going through the crane hook 9 and the center of the location at the suspension arrangement 5 in which the crane hook 9 is connected to. Manipulating the center of gravity during a lifting operation by manipulating the lateral displacement between the lifting beam 4 and the suspension arrangement 5, may improve on-site safety, in addition to provide a load distribution throughout the lifting assembly 1 may be foreseeable and possible also optimal.

Fig. 2 illustrates an embodiment of the lifting assembly 1, wherein the lifting tool 7 of the lower part 3 comprises a locking interface 10 configured for engaging the locking assembly 6 of the upper part 2.

Fig. 3 illustrates an embodiment of the lifting assembly 1, wherein the locking assembly 6 extends along a length of the lifting beam 4.

Fig. 4 illustrates an embodiment of the lifting assembly 1, wherein the locking assembly 6 extends along a length of the lifting beam 4. The locking assembly 6 further comprises a plurality of lower part attachment points 11 distributed along the length of the lifting beam 4. The lifting tool 7 of the lower part 3 comprises a locking interface 10 configured for engaging one or the plurality of lower part attachment points 11 of the locking assembly 6. Typically, the locking interface 10 may selectively engage with any of the plurality of lower part attachment points 11. The lifting tool 7 of the lower part 3 may comprise one or more locking interfaces 10. It is also realized that more than one lifting tool 7 may be engaged with the locking assembly 6.

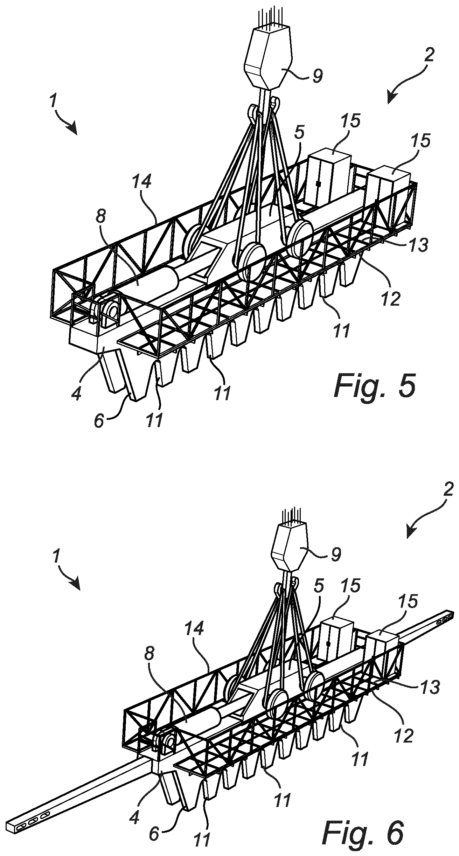

Fig. 5 illustrates an embodiment of the lifting assembly 1 comprising a platform 12 and a plurality of lower part attachment points 11 distributed along the length of the lifting beam 4. The platform 4 shown as comprising an upwards facing floor surface 13 and a fence 14. The platform 4 is arrange on either side of the lifting beam 4, whereas the fence 14 covers the outer periphery of the platform 4, and a part of the lifting beam 4 arranged between the two sides of the platform 4. The platform 4 is shown as carrying two auxiliary components 15. Examples of such auxiliary components are a battery energy system, control systems, hydraulic systems such as hydraulic motors, or any combination of the components above.

Fig. 6 illustrates an embodiment of the lifting assembly 1 comprising trunnions 16. The trunnions 16 are arranged in extension of each side of the lifting beam 4. The trunnions 16 may be configured for connecting to ropes, which may facilitate a rotation of the lifting assembly 1 and/or a stabilization of the lifting assembly 1.

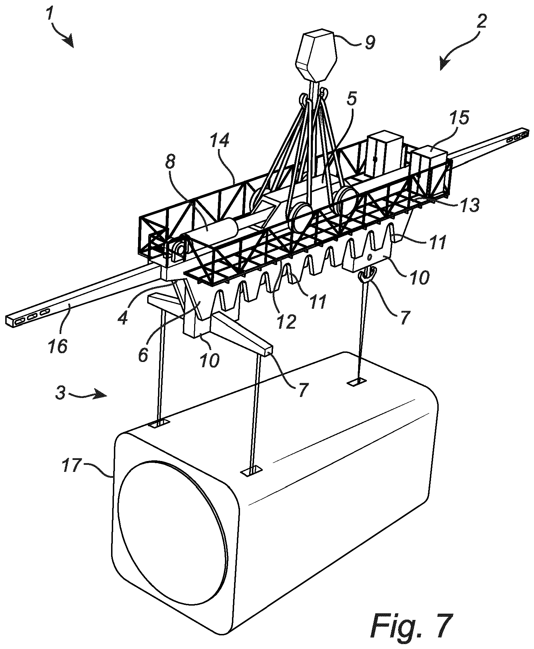

Fig. 7 illustrates a lifting assembly 1 with a lower part 3 comprising two different lifting tools 7, each lifting tool 7 being connected to different lower part attachment points 11. The lifting tools 7 are shown as being connected to a nacelle 17 by the use of ropes. Thus, the lifting assembly 1 is lifting the nacelle 17.

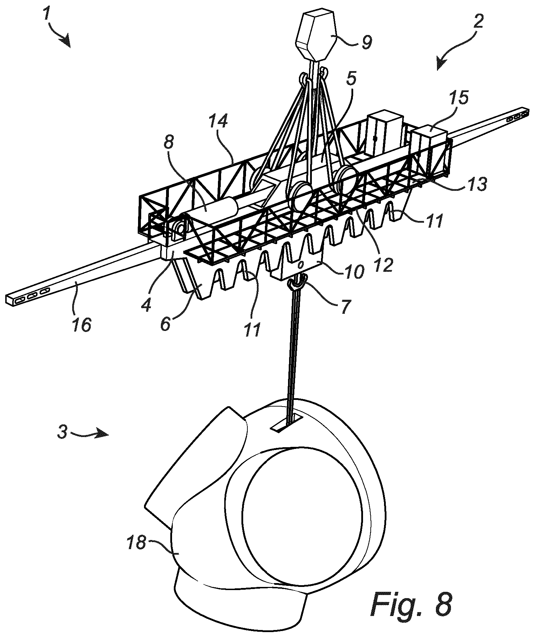

Fig. 8 illustrates a lifting assembly 1 with a lower part 3 comprising a lifting tool 7. The lifting tool 7 is shown as being connected to a nacelle 18 by the use of ropes. Thus, the lifting assembly 1 is lifting the nacelle 18.

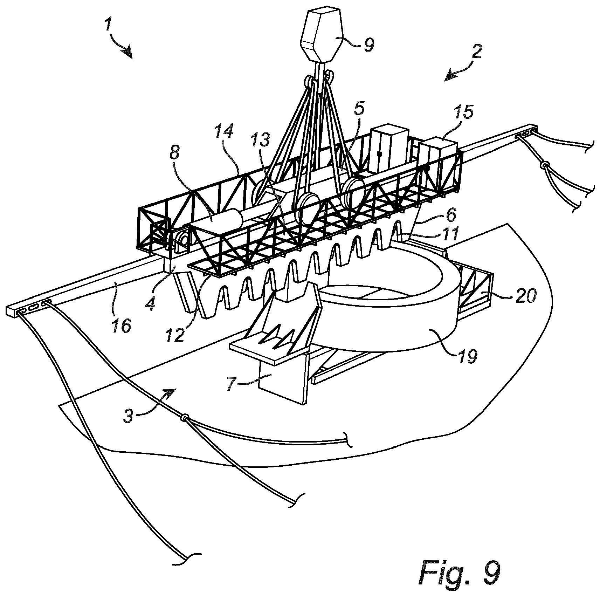

Fig. 9 illustrates a lifting assembly 1 with a lower part 3 comprising a lifting tool 7 configured for lifting a generator 19. The lifting assembly 1 is illustrated as having the lifting tool 7 lowered onto a ramp 20 in a first rotational position while carrying the generator 19. Additionally, the lifting assembly 1 is disclosed in an embodiment comprising trunnions 16 arranged in extension of the lifting beam 4 in both directions. These trunnions 16 are connected to ropes, which may be used to rotate the lifting assembly 1 and/or to stabilize the lifting assembly 1.

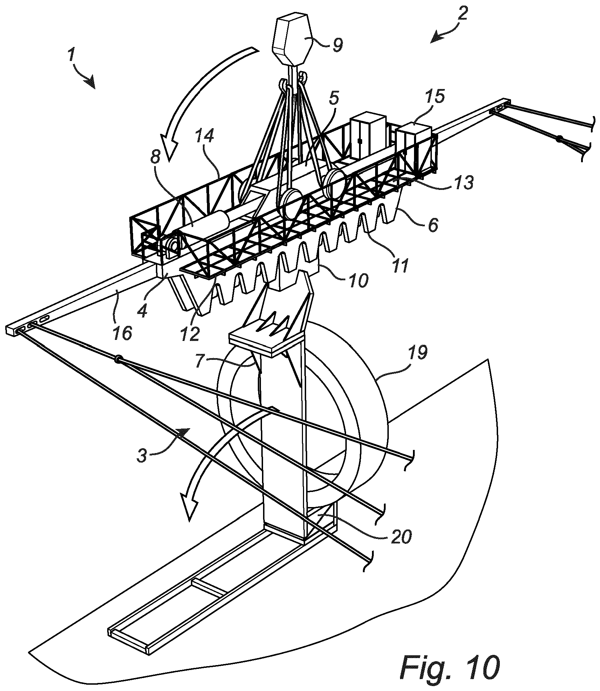

Fig. 10 illustrates an example of how a lifting assembly 1 with a lower part 3 comprising a lifting tool 7 configured for lifting a generator 19 move a lifting tool 7 connected to a generator 19 between a second rotational position and a first rotational position of the lifting tool 7. During a movement from the second rotational position to the first rotational position, one end of a substantially vertical lifting tool 7 configured for lifting a generator 19 may be held or guided, e.g. by the use of a ramp 20, while the lifting assembly 1 as a whole rotates the lifting tool 7 from the second rotational position to the first rotational position. This movement of the lifting assembly 1 may involve a combination of a horizontal movement in a first horizontal direction, and vertical movement in a downwards vertical direction. The lifting tool 7 may rotate about a rotational axis via a rotational joint, such as a pivot joint. The movement from the second rotational direction to the first direction may be reversed if needed. Although not shown in either figs 9 or 10, the lifting tool 7 configured for connecting to a generator 19 may comprise locking means for locking the lifting tool 7 in either the first rotational position or second rotational position. Additionally, the lifting assembly 1 is disclosed in an embodiment comprising trunnions 16 arranged in extension of the lifting beam 4 in both directions. These trunnions 16 are connected to ropes, which may be used to rotate the lifting assembly 1 and/or to stabilize the lifting assembly 1.

The person skilled in the art realizes that the present invention by no means is limited to what is explicitly described above. On the contrary, many modifications and variations are possible within the scope of the appended claims.

For example, the lifting tool configured for connecting to a generator may comprise an additional locking interface, which may be utilized as a locking means for locking the lifting tool in the second rotational position.

Additionally, variations can be understood and effected by the skilled person in practicing the claimed invention, from a study of the drawings, the disclosure, and the appended claims.

### References

- 1: Lifting assembly
- 2: Upper part
- 3: Lower part
- 4: Lifting beam
- 5: Suspension arrangement
- 6: Locking assembly
- 7: Lifting tool
- 8: Actuator arrangement
- 9: Crane hook
- 10: Locking interface
- 11: Lower part attachment point
- 12: Platform
- 13: Upwards facing floor surface
- 14: Fence
- 15: Auxiliary component
- 16: Trunnion
- 17: Nacelle
- 18: Hub
- 19: Generator
- 20: Ramp

## Claims

1. A lifting assembly (1) for lifting a wind turbine component (17, 18, 19), the lifting assembly (1) comprising:
an upper part (2) comprising a lifting beam (4), a suspension arrangement (5) configured for suspending the lifting beam (4) from a crane hook (9), and a locking assembly (6); and
a lower part (3) exchangeable connectable to the locking assembly (6) of the upper part (2), the lower part (3) comprising a lifting tool (7) configured for connection to the wind turbine component (17, 18, 19),
wherein the upper part (2) further comprises an actuator arrangement (8) configured to allow a lateral displacement of the lifting beam (4) in relation to the suspension arrangement (5).

2. The lifting assembly (1) according to claim 1, wherein the lower part (3) comprises a locking interface (10) configured to engage with the locking assembly (6) of the upper part (2).

3. The lifting assembly (1) according to claim 1 or 2, wherein the locking assembly (6) comprises a plurality of lower part attachment points (11) distributed along a length of the lifting beam (4).

4. The lifting assembly (1) according to any one of the claims 1-3, wherein the lateral displacement of the lifting beam (4) is dependent on the lifting tool (7) and/or the connection between the lifting tool (7) and the wind turbine component (17, 18, 19).

5. The lifting assembly (1) according to any one of the claims 1-3, further comprising a platform (12), the platform (12) being arranged on the lifting beam (4) and comprising an upwards facing floor surface (13).

6. The lifting assembly (1) according to claim 5, further comprising a battery energy storage system, BESS, the BESS being arranged on the platform (12) and being configured for powering the actuator arrangement (8).

7. The lifting assembly (1) according to claim 5 or 6, wherein the actuator arrangement (8) comprises a hydraulic actuator and a hydraulic pump, the hydraulic pump being configured for operating the hydraulic actuator.

8. A kit of parts configured to form a lifting assembly (1), the kit of parts comprising
an upper part (2) comprising a lifting beam (4), a suspension arrangement (5) configured for suspending the lifting beam (4) from a crane hook (9), an actuator arrangement (8) configured to allow a lateral displacement of the lifting beam (4) in relation to the suspension arrangement (5), and a locking assembly (6); and
a plurality of independent lower parts (3) exchangeable connectable to the locking assembly (6) of the upper part (2), each independent lower part (2) being configured to be connected to different wind turbine components (17, 18, 19).

9. The kit of parts according to claim 8, wherein each locking interface (10) of the plurality of independent lower parts (2) are identical.

10. The kit of parts according to claim 8 or 9, wherein at least one wind turbine component is a wind turbine blade.

11. The kit of parts according to claim 10, wherein the lower part (3) being configured to be connected to the wind turbine blade is configured for clamping the wind turbine blade.

12. The kit of parts according to any one of claims 8-11, wherein at least one wind turbine component is a generator (19).

13. The kit of parts according to claim 12, wherein the lower part (3) being configured to be connected to the generator (19) comprises a pivot joint and a foundation rotatable attached to the pivot joint, wherein a lifting tool (7) of the lower part (3) is configured to receive the generator (19) in a first rotational position of the foundation, lift the generator (19) in a second rotational position of the foundation, and release the generator (19) in the first rotational position of the foundation.

14. The kit of parts according to any one of claims 8-13, wherein at least one wind turbine component is a nacelle (17).

15. A Method of lifting a wind turbine component (17, 18, 19) using a lifting assembly (1) according to any one of claims 1-7, the method comprising the steps of:
connecting the lower part (3) to the locking assembly (6) of the upper part (2);
connecting the lifting tool (7) of the lower part (3) to the wind turbine component (17, 18, 19);
suspending the lifting beam (4) of the upper part (2) by the suspension arrangement (5) from a crane hook (9); and
operating the actuator arrangement (8) based on the lifting of the wind turbine component (17, 18, 19).
